# EUROPÄISCHE PATENTANMELDUNG

(11) **EP 2 849 387 A1**
(43) Veröffentlichungstag der Anmeldung: **18.03.2015**
(21) Anmeldenummer: 14185113.9
(22) Anmeldetag: 17.09.2014
(51) Int. Cl.: H04L 12/28, G05B 19/418, H01Q 1/27, H01Q 9/04, H01Q 21/24, H05B 37/02

(54) **Verfahren für eine hochfrequente Datenübertragung mit zirkular polarisierter elektromagnetischer Strahlung und Steuerungseinrichtung für eine Hausautomationsanlage**

(30) Priorität: 17.09.2013 DE 102013110252
(71) Anmelder: media transfer AG, 64293 Darmstadt (DE)
(72) Erfinder: Gaspard, Ingo, 64372 Ober-Ramstadt (DE); Ludwig, Oswald, 64665 Alsbach-Hähnlein (DE)
(74) Vertreter: Katscher Habermann Patentanwälte

(57) **Zusammenfassung**

Verfahren für eine hochfrequente drahtlose Datenübertragung zwischen einer zentralen Steuerungseinrichtung (1) und mindestens einer dezentralen Funktionskomponente (10) einer Hausautomationsanlage, wobei Komponenteninformationen von der zentralen Steuerungseinrichtung (1) in einem für die betreffende Funktionskomponente (10) kodierten Übertragungsprotokoll an die Funktionskomponente (10) übertragen werden, wobei aus einer Anzahl von Übertragungsprotokollen ein für die betreffende Funktionskomponente (10) geeignetes Übertragungsprotokoll ermittelt wird, dass die Komponenteninformationen in dieses Übertragungsprotokoll kodiert werden und dass die kodierten Komponenteninformationen mit zirkular polarisierter elektromagnetischer Strahlung von der zentralen Steuerungseinrichtung (1) zu der mindestens einen Funktionskomponente (10) übertragen werden.

## Beschreibung

Die Erfindung betrifft ein Verfahren für eine hochfrequente drahtlose Datenübertragung zwischen einer zentralen Steuerungseinrichtung und mindestens einer dezentralen Funktionskomponente einer Hausautomationsanlage, wobei Komponenteninformationen von der zentralen Steuerungseinrichtung in einem für die betreffende Funktionskomponente kodierten Übertragungsprotokoll an die Funktionskomponente übertragen werden. Die Erfindung betrifft weiterhin eine Steuerungsvorrichtung für eine Hausautomationsanlage zur Durchführung dieses Verfahrens.

Aus der Praxis sind verschiedene Verfahren für eine hochfrequente drahtlose Datenübertragung bereits bekannt. Eine zentrale Steuerungseinrichtung sendet Komponenteninformationen in einem für die betreffende Funktionskomponente kodierten Übertragungsprotokoll an die Funktionskomponente und empfängt ebenfalls kodierte Komponenteninformationen von der Funktionskomponente, die anschließend von der Steuerungseinrichtung bearbeitet und an einen Benutzer weitergegeben werden.

Die aus dem Stand der Technik bekannten Steuerungseinrichtungen und Funktionskomponenten weisen linear polarisierte Antennen auf, durch die mittels elektromagnetischer Strahlung die Komponenteninformationen übertragen werden, um auf diese Weise eine Funktionskomponente über die zentral angeordneten Steuerungseinrichtungen und ohne eine unmittelbare Betätigung von dem Benutzer kontrollieren und steuern zu können. Die Funktionskomponenten können beispielsweise Tür- oder Fensteröffner, Alarm-, Heizungs-, Lüftungs- oder Lichtanlagen sowie andere Vorrichtungen sein oder aufweisen. Durch die zentrale Steuerungseinrichtung kann jede einzelne Funktionskomponente unmittelbar über die zentrale Steuerungseinheit gesteuert werden.

Bei einer Hausautomation werden regelmäßig mehrere dezentral angeordnete und über das Gebäude verteilte Funktionskomponenten mit einer einzigen zentralen Steuerungseinheit gesteuert. Um eine zuverlässige Verbindung mit einer ausreichenden Signalstärke gewährleisten zu können werden die linear polarisierten Antennen der Steuerungsvorrichtung und der einzelnen Funktionskomponenten zueinander jeweils derart ausgerichtet, dass die Komponenteninformationen mit möglichst geringen Signalverlusten zwischen der Steuerungseinheit und der Funktionskomponente übermittelt werden können. Bei mehreren an einer Steuerungseinrichtung angebundenen Funktionskomponenten ist eine Ausrichtung der Antennen für jede einzelne Funktionskomponente vorzunehmen, was zu einem hohen Aufwand und hohen Kosten führen kann. Zudem müssen die Antennen aller Funktionskomponenten übereinstimmend bzw. vergleichbar ausgerichtet sein.

Da die Funktionskomponenten bei der Hausautomation innerhalb eines Gebäudes verteilt sind, können eine Reflexion an Wänden, an Decken oder an Böden, eine Beugung an Möbelkanten oder an Mauervorsprüngen, eine Streuung an rauen Oberflächen die Intensität der Komponenteninformation negativ beeinträchtigen und Dämpfungsverluste bis etwa -30 dB hervorrufen.

Die einzelnen Funktionskomponenten müssen durch individuell kodierte Übertragungsprotokolle angesteuert werden, sodass zur Herstellung einer ersten Verbindung zwischen einer Funktionskomponente und der Steuerungseinrichtung ein Abspeichern der entsprechenden zu der Funktionskomponente zugehörigen Übertragungsprotokolle in der Steuerungseinrichtung notwendig ist. Somit kann die Herstellung einer ersten Verbindung zwischen einer Funktionskomponente und der Steuerungseinrichtung nur durch einen Fachmann vorgenommen werden, was mit einem hohen Zeitaufwand und hohen Kosten verbunden ist.

Zudem weisen die Funktionskomponenten und Steuerungseinrichtungen verschiedener Hersteller jeweils untereinander inkompatible Übertragungsprotokolle auf, so dass für eine Hausautomationsanlage ausschließlich Funktionskomponenten eines einzigen Herstellers verwendet werden können.

Aus US 2010/0328135 A1 oder DE 19 43 738 B2 sind Verfahren bekannt, bei denen die Polarisation der für die Informationsübermittlung zwischen einem Sender und einem Empfänger verwendeten elektromagnetischen Strahlung gezielt beeinflusst und gegebenenfalls zeitlich verändert wird, um die Informationen zuverlässig übertragen zu können und eine Beeinträchtigung durch abweichend polarisierte Strahlung vermeiden zu können. Der Aufwand für die Erzeugung und den Nachweis veränderbar polarisierter Strahlung ist erheblich. Zudem müssen der Sender und der Empfänger aufeinander abgestimmt sein.

Die Aufgabe der Erfindung ist es demzufolge, ein Verfahren und eine Steuerungsvorrichtung für eine hochfrequente drahtlose Datenübertragung so auszugestalten, dass die Herstellung einer ersten Verbindung zwischen einer Funktionskomponente und der Steuerungseinrichtung mit einem geringen Zeitaufwand und mit einem reduzierten Kostenaufwand vorgenommen werden kann, dass Verluste in der Intensität der Komponenteninformationen aufgrund einer Reflexion, einer Beugung oder einer Streuung minimiert werden und dass die Funktionskomponenten mit unterschiedlichen Übertragungsprotokollen auf eine einfache Weise installiert und gesteuert werden können.

Diese Aufgabe wird erfindungsgemäß dadurch gelöst, dass aus einer Anzahl von Übertragungsprotokollen ein für die betreffende Funktionskomponente geeignetes Übertragungsprotokoll ermittelt wird, dass die Komponenteninformationen in dieses Übertragungsprotokoll kodiert werden und dass die kodierten Komponenteninformationen mit zirkular polarisierter elektromagnetischer Strahlung von der zentralen Steuerungseinrichtung zu der Funktionskomponente übertragen werden. Eine Ermittlung des geeigneten Übertragungsprotokolls gewährleistet, dass die Funktionskomponenten von unterschiedlichen Herstellern auf eine einfache Weise installiert und gesteuert werden können. Die Übertragung der Komponenteninformationen mit einer zirkular polarisierten elektromagnetischen Strahlung gewährleistet zusätzlich, dass Dämpfungsverluste aufgrund von Depolarisationseffekten beispielsweise in Folge von Reflexionen, einer Beugung oder einer Streuung in einem Gebäude vermindert werden. Durch die zirkular polarisierte elektromagnetische Strahlung wird weiterhin erreicht, dass Funktionskomponenten, die linear polarisierten Antennen für die Datenübertragung verwenden, nicht relativ zu der zentralen Steuerungseinrichtung ausgerichtet werden müssen, um eine übermäßige Dämpfung der jeweils für die Datenübertragung nutzbaren elektromagnetischen Strahlung zu vermeiden, die bei zwei senkrecht zueinander ausgerichteten linear polarisierten Antennen bis zu - 30 dB betragen kann. Dadurch können bei der Anordnung und Ausrichtung der zentralen Steuerungseinrichtung und der Funktionskomponenten ein Mehraufwand und Kosten minimiert werden. Zudem wird auch die Montage von Funktionskomponenten verschiedener Hersteller erleichtert, da unterschiedliche Strahlungscharakteristika der Funktionskomponenten von verschiedenen Herstellern nicht berücksichtigt werden müssen.

Die Verwendung einer zirkular polarisierten Antenne bei der zentralen Steuerungseinrichtung erlaubt erfindungsgemäß nicht nur das Versenden, sondern auch den Empfang von Nachrichten, die von den Funktionskomponenten an die zentrale Steuerungseinrichtung übermittelt werden, wobei ebenfalls unabhängig von den in jeweiligen Einzelfall bei den Funktionskomponenten verwendeten Antennen und deren Ausrichtung, bzw. Strahlungscharakteristik lediglich eine geringe Dämpfung der für die Datenübertragung nutzbaren elektromagnetischen Strahlung entstehen kann. Gemäß einer vorteilhaften Ausgestaltung des Erfindungsgedankens ist vorgesehen, dass zur Herstellung einer ersten Verbindung zwischen der Steuerungseinrichtung und einer Funktionskomponente ein für die Kommunikation zu verwendendes Übertragungsprotokoll von einem Benutzer ausgewählt wird. Somit kann der Benutzer die Funktionskomponente vorwählen, so dass die Steuerungseinrichtung ein zu verwendendes Übertragungsprotokoll auswählen und die Komponenteninformationen mit diesem Übertragungsprotokoll kodieren kann.

Die Erfindung sieht vor, dass im nachfolgenden Schritt eine Abfragenachricht an die entsprechende Funktionskomponente von der Steuerungseinrichtung gesendet wird. In diesem Schritt versucht die Steuerungseinrichtung die entsprechende Funktionskomponente anzusteuern und sendet so eine mit dem entsprechenden Übertragungsprotokoll kodierte Abfragenachricht an die entsprechende Funktionskomponente.

Es ist vorgesehen, dass nach einem Empfangen einer Antwortnachricht ein Identifizierungskode und das Übertragungsprotokoll der entsprechenden Funktionskomponente in der Komponentendatenbank abgelegt werden. In diesem Schritt speichert die Steuerungseinrichtung die zu der Funktionskomponente zugehörigen Informationen, sodass nachfolgend die Funktionskomponente auf eine einfache Weise von der Steuerungseinrichtung angesteuert werden kann bzw. die Steuereinrichtung und die Funktionskomponente miteinander kommunizieren können, und keine erneute Ermittlung oder Auswahl des Übertragungsprotokolls notwendig ist.

Es ist ebenfalls erfindungsgemäß möglich, dass zur Herstellung einer ersten Verbindung zwischen der Steuerungseinrichtung und einer Funktionskomponente verschieden kodierte Abfragenachrichten in regelmäßigen Abständen versendet werden. Auf diese Weise kann erreicht werden, dass die Steuerungseinrichtung gezielt nach neuen, bislang nicht installierten Funktionskomponenten sucht. Eine erste Inbetriebnahme der einzelnen Funktionskomponenten der Hausautomationsanlage kann auf diese Weise automatisch und ohne einen ansonsten erforderlichen Benutzereingriff durchgeführt werden. Auch zu einem späteren Zeitpunkt können so beispielsweise neu montierte Funktionskomponenten, die bislang noch nicht von der Steuerungseinrichtung angesteuert wurden, aufgefunden und bei der Steuerungseinrichtung hinterlegt, bzw. installiert werden. Die Abstände, in denen die Steuerungseinrichtung nach neuen Funktionskomponenten sucht, können beispielsweise mehrere Stunden oder wenige Minuten betragen. Es ist ebenfalls möglich, ausschließlich oder zusätzlich eine durch den Benutzer getriggerte Versendung von Abfragenachrichten zu ermöglichen.

Weiterhin ist vorgesehen, dass zur Herstellung einer ersten Verbindung zwischen der Steuerungseinrichtung und einer Funktionskomponente verschieden kodierte Abfragenachrichten nach einer Benutzervorgabe versendet werden. So kann beispielsweise der Benutzer gezielt nach neuen Funktionskomponenten suchen. Nach der Benutzervorgabe sendet die Steuerungseinrichtung mehrere mit unterschiedlichen Übertragungsprotokollen kodierte Abfragenachrichten an die Funktionskomponenten und wartet auf die Antwortnachrichten der Funktionskomponenten. Erfindungsgemäß ist vorgesehen, dass eine Antwortnachricht mit in der vorgegebenen Sammeldatenbank hinterlegten Antwortnachrichten verglichen wird und ein Identifizierungskode und ein Übertragungsprotokoll der entsprechenden Funktionskomponente in der Komponentendatenbank abgelegt werden. Nach einem Vergleich der Antwortnachrichten mit in der Komponentendatenbank abgespeicherten Informationen kann die Steuerungseinrichtung neue Funktionskomponenten, die noch nicht in der Komponentendatenbank abgelegt sind, installieren und steuern. Die Installation der neuen Funktionskomponenten wird durch ein Speichern des Identifizierungskodes der Funktionskomponente in der Komponentendatenbank durchgeführt und anschließend kann die Funktionskomponente von der Steuerungseinrichtung gezielt gesteuert werden.

Es ist ebenfalls alternativ oder zusätzlich möglich, dass eine Anmeldenachricht einer Funktionskomponente empfangen wird, dass die empfangene Anmeldenachricht nachfolgend mit in einer vorgegebenen Sammeldatenbank hinterlegten Anmeldenachrichten verglichen wird und dass ein Identifizierungskode und ein Übertragungsprotokoll der entsprechenden Funktionskomponente in der Komponentendatenbank abgelegt wird. Einige handelsüblich erhältlichen Funktionskomponenten können entweder nach einem erstmaligen Einschalten, nach jedem Einschaltvorgang oder durch einen Benutzer getriggert eine Anmeldenachricht versenden, die von der Steuereinrichtung empfangen wird. Nach einem Vergleich einer derartigen Anmeldenachrichten mit in der Komponentendatenbank abgespeicherten Informationen kann die Steuerungseinrichtung die neue Funktionskomponenten, die noch nicht in der Komponentendatenbank abgelegt ist, installieren und steuern. Sollte die Funktionskomponente in der Steuereinrichtung bereits früher erkannt und installiert worden sein, kann nach Erhalt einer Anmeldenachricht die bestehende Installation überprüft und aktualisiert werden. Die Installation der neuen Funktionskomponenten wird zweckmäßigerweise ebenfalls durch ein Speichern des Identifizierungskodes der Funktionskomponente in der Komponentendatenbank durchgeführt. Eine derartige Anmeldung einer Funktionskomponente und deren Einbindung in der Steuereinrichtung ist insbesondere für Funktionskomponenten wie beispielsweise Sensoren vorteilhaft, die ausschließlich unidirektional korrespondieren können und nicht oder nur ungenügend Anfragen oder Informationen von der Steuereinrichtung verarbeiten können.

Um die Bedienung einzelner Funktionskomponenten zu erleichtern ist vorgesehen, dass die Komponenteninformationen und Bedienungsinformationen auf einer einheitlichen und von dem Typ der jeweiligen Funktionskomponente unabhängigen Weise auf einer Bedienungseinrichtung angezeigt werden. Die Komponenteninformationen können Informationen wie beispielsweise Name und Typ der Funktionskomponente und die Bedienungsinformationen können Informationen wie beispielsweise mögliche Steuerungsbefehle beinhalten. Eine einheitliche und von dem Typ der jeweiligen Funktionskomponente unabhängige Anzeige der Komponenteninformationen und der Bedienungsinformationen gewährleistet, dass der Benutzer alle Funktionskomponenten, die üblicherweise von unterschiedlichen Herstellern sind, einheitlich wahrnimmt und auf eine einfache Weise steuern kann.

Die Erfindung betrifft auch eine Steuerungseinrichtung für eine hochfrequente drahtlose Datenübertragung zwischen der Steuerungseinrichtung und mindestens einer dezentralen Funktionskomponente einer Hausautomationsanlage.

Erfindungsgemäß ist vorgesehen, dass die Steuerungseinrichtung eine zirkular polarisierte Antenne aufweist, wobei die zirkular polarisierte Antenne die kodierten Komponenteninformationen an die Funktionskomponente mittels zirkular polarisierter elektromagnetischer Strahlung überträgt. Die zirkular polarisierte Antenne ermöglicht, dass die Dämpfungsverluste bei der Datenübertragung zwischen der Steuerungseinrichtung und den Funktionskomponenten mit linear polarisierten Antennen im statistischen Mittel über alle denkbaren Ausbreitungsszenarien von und zu den Funktionskomponenten minimiert werden. So können die Dämpfungsverluste in Folge von Depolarisationseffekten minimiert werden, die beispielsweise durch Reflexionen an Wänden, an Zimmerdecken, an Böden, durch Beugung an Kanten sowie durch Streuung an rauen Oberflächen hervorgerufen werden können. Die zirkular polarisierte Antenne kann beispielsweise in Form einer Patchantenne ausgeführt sein, die in die Steuerungseinrichtung integriert ist.

Erfindungsgemäß ist vorgesehen, dass die Steuerungseinrichtung dazu geeignet ist, eine hochfrequente drahtlose Datenübertragung nach dem Verfahren wie oben beschrieben durchzuführen.

Einer vorteilhaften Ausgestaltung des Erfindungsgedankens zufolge ist vorgesehen, dass die Steuerungseinrichtung eine Speichereinheit aufweist, wobei die Speichereinheit ein für die betreffende Funktionskomponente geeignetes und abrufbares Übertragungsprotokoll speichert. Die Speichereinheit kann mehrere Datenbanken, wie beispielsweise Komponentendatenbank, in der der Identifikationskode und das Übertragungsprotokoll der entsprechenden Funktionskomponente abgespeichert werden, und eine Sammeldatenbank, in der mehrere Übertragungsprotokolle abgespeichert werden, beinhalten.

Vorteilhafterweise ist vorgesehen, dass die Steuerungseinrichtung eine Dekodierungseinheit aufweist, wobei die Dekodierungseinheit die Komponenteninformationen kodiert und dekodiert. Bevor eine Abfragenachricht versendet wird, wird diese in der Dekodierungseinheit in das entsprechende Übertragungsprotokoll kodiert und nach einem Empfangen der Antwortnachricht wird diese mit dem entsprechenden Übertragungsprotokoll dekodiert. Dadurch wird gewährleistet, dass mehrere Funktionskomponenten von der Steuerungseinrichtung gesteuert werden können, ohne dass der Benutzer die entsprechenden Übertragungsprotokolle für jede angebundene Funktionskomponente extra vorgibt.

Es ist bevorzugt vorgesehen, dass die Steuerungseinrichtung einen Prozessor aufweist, wobei in dem Prozessor die Komponenteninformationen und Bedienungsinformationen eines Benutzers verarbeitet werden. Der Prozessor verarbeitet die Komponenteninformationen, die Befehle des Benutzers und leitet die Komponenteninformationen zu weiteren Komponenten der Steuerungseinrichtung weiter.

Um eine Ersteinrichtung, die Benutzung und den Betrieb der Steuerungseinrichtung zu erleichtern ist vorgesehen, dass die Steuerungseinrichtung eine Bedienungseinrichtung aufweist, wobei die Komponenteninformationen und Bedienungsinformationen auf einer einheitlichen und von dem Typ der jeweiligen Funktionskomponente unabhängigen Weise auf einer Bedienungseinrichtung angezeigt werden. Die Bedienungseinrichtung kann beispielsweise ein Display und eine Tastatur aufweisen, sodass die Komponenteninformationen von dem Benutzer wahrgenommen und die Befehle von dem Benutzer eingegeben werden können. Die Komponenteninformationen zu der jeweiligen Funktionskomponente werden auf eine einheitliche Weise dargestellt, so dass der Benutzer mehrere Funktionskomponenten auf eine vergleichbare Weise steuern kann.

Erfindungsgemäß ist vorgesehen, dass die Steuerungseinrichtung eine Schnittstelle für ein mobiles Steuerungsgerät aufweist, wobei das mobile Steuerungsgerät die Komponenteninformationen von der Steuerungseinrichtung empfangen und die Bedienungsinformationen von dem Benutzer an die Steuerungseinrichtung senden kann. Dadurch wird erreicht, dass der Benutzer die Steuerungseinrichtung aus einer Entfernung ansprechen kann, ohne dass der Benutzer gezwungen ist die Befehle direkt an der Steuerungseinrichtung einzugeben.

Weitere vorteilhafte Ausgestaltungen des erfindungsgemäßen Verfahrens und der erfindungsgemäßen Steuerungseinrichtung werden anhand von in der Zeichnung dargestellten Ausführungsformen näher erläutert. Es zeigt:
- Fig. 1: eine schematische Ansicht einer Steuerungseinrichtung,
- Fig. 2: eine schematische Ansicht einer Steuerungseinrichtung und drei Funktionskomponenten,
- Fig. 3: eine schematische Ansicht einer Steuerungseinrichtung mit einer Bedienungseinrichtung,
- Fig. 4: eine schematische Ansicht eines mobilen Steuerungsgeräts.

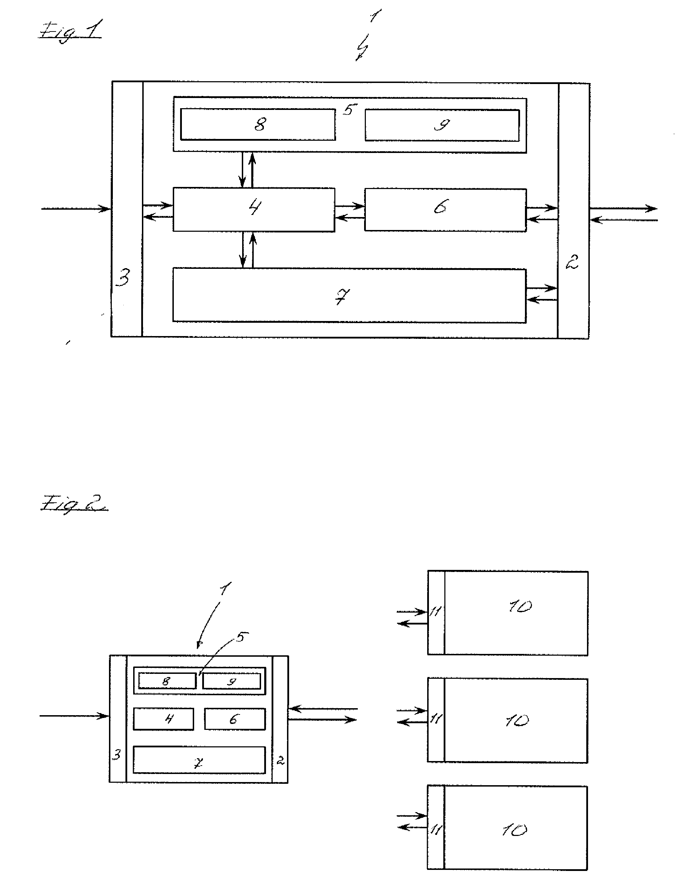

In Fig. 1 ist eine schematische Ansicht einer Steuerungseinrichtung 1 mit einer zirkular polarisierten Antenne 2 und einer Bedienungseinrichtung 3 gezeigt. Die Steuerungseinrichtung 1 weist einen Prozessor 4, eine Speichereinheit 5, eine Dekodierungseinheit 6 und eine Schnittstelle 7 auf. Auf der Bedienungseinrichtung 3 werden die Komponenteninformationen und die Bedienungsinformationen auf eine einheitliche und von dem Typ der jeweiligen Funktionskomponente unabhängige Weise angezeigt. Die Bedienungsinformationen und die Komponenteninformationen werden in dem Prozessor 4 verarbeitet und durch die zirkular polarisierte Antenne 2 werden die kodierten Komponenteninformationen an die Funktionskomponenten mittels zirkular polarisierter elektromagnetischer Strahlung übertragen. Die Komponenteninformationen für die betreffenden Funktionskomponenten sowie Übertragungsprotokolle werden in der Speichereinheit 5 abgespeichert. Die Speichereinheit 5 weist in diesem Ausführungsbeispiel zwei Datenbanken auf, wobei in einer ersten Sammeldatenbank 8 mehrere Übertragungsprotokolle für unterschiedliche Funktionskomponenten abgespeichert werden und wobei in einer zweiten Komponentendatenbank 9 die Identifizierungskode und die Übertragungsprotokolle für die der Steuerungseinrichtung 1 bereits bekannte Funktionskomponenten abgespeichert werden.

Fig. 2 zeigt eine schematische Ansicht einer Steuerungseinrichtung 1 und drei Funktionskomponenten 10. Jede der Funktionskomponenten 10 weist eine linear polarisierte Antenne 11 auf, mit der die Komponenteninformationen an die Steuerungseinrichtung 1 übertragen werden.

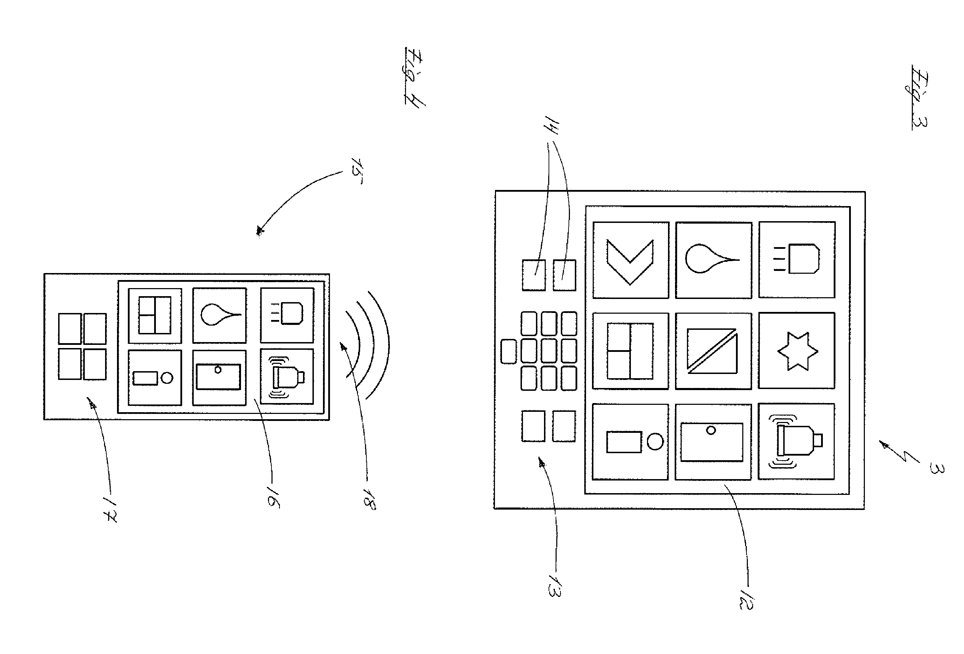

Fig. 3 zeigt eine schematische Ansicht einer Bedienungseinrichtung 3. Die Bedienungseinrichtung 3 weist eine einheitliche und von dem Typ der jeweiligen Funktionskomponente unabhängige Oberfläche auf, so dass der Benutzer auf eine einfache Weise die angebundenen Funktionskomponenten 10 ansteuern kann. Die Bedienungseinrichtung 3 weist einen Display 12 und eine Tastatur 13 mit mehreren Funktionstasten 14 auf. An der Bedienungseinrichtung 3 können die Bedienungsinformationen von dem Benutzer eingegeben werden, wobei die Bedienungsinformationen weiterhin an den Prozessor 4 weitergeleitet werden.

Fig. 4 zeigt eine schematische Ansicht eines mobilen Steuerungsgerätes 15. Das mobile Steuerungsgerät 15 weist einen Display 16 und eine Tastatur 17 auf. Durch die Tastatur 17 kann die entsprechende Funktionskomponente 10 auf dem Display 16 ausgewählt und die Bedienungsinformationen von dem Benutzer an die Steuerungseinrichtung 1 versendet werden. Das mobile Steuergerät 15 weist weiterhin einen Sende- und Empfangsmittel 18 auf, mit dem das mobile Steuergerät 15 mit der Steuerungseinrichtung 1 kommunizieren kann.

## Patentansprüche

1. Verfahren für eine hochfrequente drahtlose Datenübertragung zwischen einer zentralen Steuerungseinrichtung (1) und mindestens einer dezentralen Funktionskomponente (10) einer Hausautomationsanlage, wobei Komponenteninformationen von der zentralen Steuerungseinrichtung (1) in einem für die betreffende Funktionskomponente (10) kodierten Übertragungsprotokoll an die Funktionskomponente (10) übertragen werden, **dadurch gekennzeichnet, dass** aus einer Anzahl von Übertragungsprotokollen ein für die betreffende Funktionskomponente (10) geeignetes Übertragungsprotokoll ermittelt wird, dass die Komponenteninformationen in dieses Übertragungsprotokoll kodiert werden und dass die kodierten Komponenteninformationen mit zirkular polarisierter elektromagnetischer Strahlung von der zentralen Steuerungseinrichtung (1) zu der mindestens einen Funktionskomponente (10) übertragen werden.

2. Verfahren nach Anspruch 1, **dadurch gekennzeichnet, dass** zur Herstellung einer ersten Verbindung zwischen der Steuerungseinrichtung (1) und einer Funktionskomponente (10) ein für die Kommunikation zu verwendendes Übertragungsprotokoll von einem Benutzer ausgewählt wird.

3. Verfahren nach Anspruch 2, **dadurch gekennzeichnet, dass** im nachfolgenden Schritt eine Abfragenachricht an die entsprechende Funktionskomponente (10) von der Steuerungseinrichtung (1) gesendet wird.

4. Verfahren nach Anspruch 3, **dadurch gekennzeichnet, dass** nach einem Empfangen einer Antwortnachricht ein Identifizierungskode und das Übertragungsprotokoll der entsprechenden Funktionskomponente (10) in der Komponentendatenbank (9) abgelegt werden.

5. Verfahren nach Anspruch 1, **dadurch gekennzeichnet, dass** zur Herstellung einer ersten Verbindung zwischen der Steuerungseinrichtung (1) und einer Funktionskomponente (10) verschieden kodierte Abfragenachrichten in regelmäßigen Abständen versendet werden.

6. Verfahren nach Anspruch 1, **dadurch gekennzeichnet, dass** zur Herstellung einer ersten Verbindung zwischen der Steuerungseinrichtung (1) und einer Funktionskomponente (10) verschieden kodierte Abfragenachrichten nach einer Benutzervorgabe versendet werden.

7. Verfahren nach einem der vorangehenden Ansprüche, **dadurch gekennzeichnet, dass** eine Antwortnachricht mit in einer vorgegebenen Sammeldatenbank (8) hinterlegten Antwortnachrichten verglichen wird und ein Identifizierungskode und ein Übertragungsprotokoll der entsprechenden Funktionskomponente (10) in der Komponentendatenbank (9) abgelegt wird.

8. Verfahren nach einem der vorangehenden Ansprüche, **dadurch gekennzeichnet, dass** eine Anmeldenachricht einer Funktionskomponente (10) empfangen wird, dass die empfangene Anmeldenachricht nachfolgend mit in einer vorgegebenen Sammeldatenbank (8) hinterlegten Anmeldenachrichten verglichen wird und dass ein Identifizierungskode und ein Übertragungsprotokoll der entsprechenden Funktionskomponente (10) in der Komponentendatenbank (9) abgelegt wird.

9. Verfahren nach einem der vorangehenden Ansprüche, **dadurch gekennzeichnet, dass** die Komponenteninformationen und Bedienungsinformationen auf einer einheitlichen und von dem Typ der jeweiligen Funktionskomponente (10) unabhängigen Weise auf einer Bedienungseinrichtung (3) angezeigt werden.

10. Steuerungseinrichtung (1) für eine hochfrequente drahtlose Datenübertragung zwischen der Steuerungseinrichtung (1) und mindestens einer dezentralen Funktionskomponente (10) einer Hausautomationsanlage, **dadurch gekennzeichnet, dass** die Steuerungseinrichtung (1) eine zirkular polarisierte Antenne (2) aufweist, wobei die zirkular polarisierte Antenne (2) die kodierten Komponenteninformationen an die Funktionskomponente (10) mittels zirkular polarisierter elektromagnetischer Strahlung überträgt, und dass die Steuerungseinrichtung (1) dazu geeignet ist, eine hochfrequente drahtlose Datenübertragung gemäß einem in Ansprüchen 1 bis 8 beschriebenen Verfahren durchzuführen.

11. Steuerungseinrichtung (1) nach Anspruch 10, **dadurch gekennzeichnet, dass** die Steuerungseinrichtung (1) eine Speichereinheit (5) aufweist, wobei die Speichereinheit (5) ein für die betreffende Funktionskomponente (10) geeignetes und abrufbares Übertragungsprotokoll speichert.

12. Steuerungseinrichtung (1) nach Anspruch 10 oder 11, **dadurch gekennzeichnet, dass** die Steuerungseinrichtung (1) eine Dekodierungseinheit (6) aufweist, wobei die Dekodierungseinheit (6) die Komponenteninformationen kodiert und dekodiert.

13. Steuerungseinrichtung (1) nach einem der Ansprüche 10 bis 12, **dadurch gekennzeichnet, dass** die Steuerungseinrichtung (1) einen Prozessor (4) aufweist, wobei in dem Prozessor (4) die Komponenteninformationen und Bedienungsinformationen eines Benutzers verarbeitet werden.

14. Steuerungseinrichtung (1) nach einem der Ansprüche 10 bis 13, **dadurch gekennzeichnet, dass** die Steuerungseinrichtung (1) eine Bedienungseinrichtung (3) aufweist, wobei die Komponenteninformationen und Bedienungsinformationen auf eine einheitliche und von dem Typ der jeweiligen Funktionskomponente unabhängige Weise auf einer Bedienungseinrichtung (3) angezeigt werden.

15. Steuerungseinrichtung (1) nach einem der Ansprüche 10 bis 14, **dadurch gekennzeichnet, dass** die Steuerungseinrichtung (1) eine Schnittstelle (7) für ein mobiles Steuerungsgerät (15) aufweist, wobei das mobile Steuerungsgerät (15) die Komponenteninformationen von der Steuerungseinrichtung (1) empfangen und die Bedienungsinformationen von dem Benutzer an die Steuerungseinrichtung (1) senden kann.
